# EUROPEAN PATENT SPECIFICATION

(11) **EP 0 870 137 B1**
(45) Date of publication and mention of the grant of the patent: **07.11.2001**
(21) Application number: 96943882.9
(22) Date of filing: 18.12.1996
(51) Int. Cl.: F16K 1/44

(54) **VALVE**
VENTIL
SOUPAPE

(30) Priority: 05.01.1996 DE 19600275
(43) Date of publication of application: 14.10.1998
(73) Proprietor: Sauer-Danfoss (Nordeborg) A/S, 6430 Nordborg (DK)
(72) Inventor: FRIEDRICHSEN, Welm, DK-6430 Nordborg (DK); MABIT, Xavier, DK-6470 Sydals (DK)
(74) Representative: Nissen, Georg
(86) International application number: DK9600540
(87) International publication number: WO9725559

(56) References cited:
- DE-A- 1 550 299
- DE-A- 3 204 070
- US-A- 4 395 050
- US-A- 4 566 486

## Description

The invention relates to a valve according to the preamble of claim 1.

Such a valve is known from the document DE 3204070.

Such valves are commonly known. In the closed state they are supposed to interrupt a flow path, in a way that a fluid, especially a liquid, cannot flow any longer. When, however, the valve is opened, i.e. the closing member is lifted from the valve seat, the flow path is released.

Normally, it is desired that such valves are tight, i.e. show no leakage in the closed state. The tightness is especially crucial when the valve is not only used for control purposes, but also takes over security responsibility. When leakages occur, part of the valve function may be lost. A driven motor, for instance, will then continue working, even if the valve is closed. Even though movements caused by this are very slow, they can be dangerous.

Normally, such valves are therefore tested after assembling. Valves, the leakage rate of which exceeds a predetermined size, will be scrapped.

In order to keep the scrap at the lowest possible level, several methods have been tested in the past. For instance, it has been tried to manufacture the co-operating parts with small tolerances. However, this solution makes the production of the valves expensive.

Besides, also small or low tolerances incur problems, as small displacements occur during assembling, which again lead to a certain leakage. Endeavouring to catch such displacement possibilities through even lower tolerances will give rise to the problem that when assembling the individual parts, scratches or similar damages may occur, which again lead to leakages.

An alternative to this is the use of synthetic or rubber parts between the valve seat and the closing member. From US 4,566,486 a solution with a synthetic sealing element is known, in which the synthetic material is not placed between the valve seat and the closing member, but next to the valve seat in a way that it also works on the closing member, which is here formed as a ball.

The purpose of the invention is to improve the tightness of a valve having a simple construction.

With a valve as described in the introduction, this is solved by the features of the characterising part of claim 1.

Thus, the valve can be assembled as usual, without the use of any additional parts, such as rubber or synthetic sealings. Closing member and valve seat are still adjacent to each other. However, the tightness is now improved in that one of the parts, i.e. closing member or valve seat, is coated with a coating material. The uncoated closing surface will bear on this coating material. As the coating material is softer than the material of the other closing surface, the coating material will yield when the bearing forces are unequally distributed over the surface. Such an inequality always occurs when there are unevennesses, such as local projections or valleys. When the closing surfaces are brought to bear against each other, the harder material of one of the closing surfaces can deform the softer coating material correspondingly, so that one closing surface becomes the negative image of the other closing surface. This forming already takes place at the first bearing of the two closing surfaces, resulting in a valve which is tight from the very beginning. This means a considerable facilitation of the mounting. The coating of one of the surfaces can in many cases be made simultaneously with or directly after the production of the part carrying the corresponding closing surface, so that when mounting no additional parts have to be handled. Also, it will no longer be necessary to be extremely careful not to touch the closing surfaces unintentionally. The coating material can be relatively soft. It could even be so soft that it gets at least partly worn-out during operation through repeated opening and closing movements. Unevennesses in both closing surfaces, however, which cause the mechanical load on the coating material leading to the wear, have no effect elsewhere, that is, exactly in the places where the coating material must be preserved. Thus the tightness will also be provided after a long time of operation.

Preferably the coating material is made in one piece with the closing surface. Especially effective connections appear when the coating material is materially locked with the closing surface. Such a connection ensures a high degree of stability. The coating material cannot be removed from the closing surface. It can only be worn from the outside.

Preferably, the thickness of the coating material is less than 50 µm, especially 10 µm or less. This means that the layer of coating material is very thin. Correspondingly little material is used, and correspondingly little consideration must be paid to the costs incurred through the material consumption for the coating. None the less, such a thin layer is sufficient to ensure the required tightness of the valve.

Preferably, the coating material is galvanised or steamed onto the closing surface. This gives a very tight connection between the coating material and the closing surface.

Hereby, it is especially preferred that the coating material is a metal. As the closing surfaces of valve seat and closing member are also made of a metal, a correspondingly tight connection can be reached with a coating material of metal. This connection could also be reached through soldering or application welding.

Preferably, the metal is tin, lead or zinc. These metals are soft enough to get deformed by a corresponding pressing force. However, the pressing force does not even have to be extremely strong.

In an alternative embodiment the coating material is a synthetic material. When fixed correspondingly with the closing surface, also synthetic materials can contribute to the tightening of the valve.

Preferably the closing member has an additional valve seat co-operating with an additional closing member, by which an additional closing surface between the additional valve seat and the additional closing member is coated with the coating material. Especially in connection with special kinds of overpressure valves it is desirable to control the overpressure in both connections. When the overpressure in one connection gets too high, the valve is opened to let liquid flow to the second connection. The valve is also opened when the overpressure in the second connection gets too high, to let liquid flow to the first connection. Expediently, this happens with a valve being functionally equipped with two closing members and two valve seats. When now the second valve seat has been formed in the closing member, the coating can be concentrated on one single part, namely the closing member. This is a further simplification of the production process.

Here it is advantageous that the closing member is formed as a plate, on which the closing surface is placed on the bearing side of the additional closing member, and that at least this side is coated with the coating material. Thus the coating of the closing member can on one hand be limited to one side, on the other hand it is ensured that the coating takes effect on both valve functions, i.e. the valve is tight in both flow directions when it is closed. The other side of the plate, which must not necessarily be coated, can then be used for holding the plate while coating. Of course this side can be coated too, only it is not absolutely necessary. During operation the side turning away from the additional closing member can bear against an abutment or be formed in one piece with such an abutment.

Preferably, the closing member is made of sintered steel and the additional closing member is made of hardened steel. This results in a graduation of the hardnesses between the individual parts, so that the desired effect of the pressing of the closing surface in question into the coating material, namely the improved tightness, comes almost automatically.

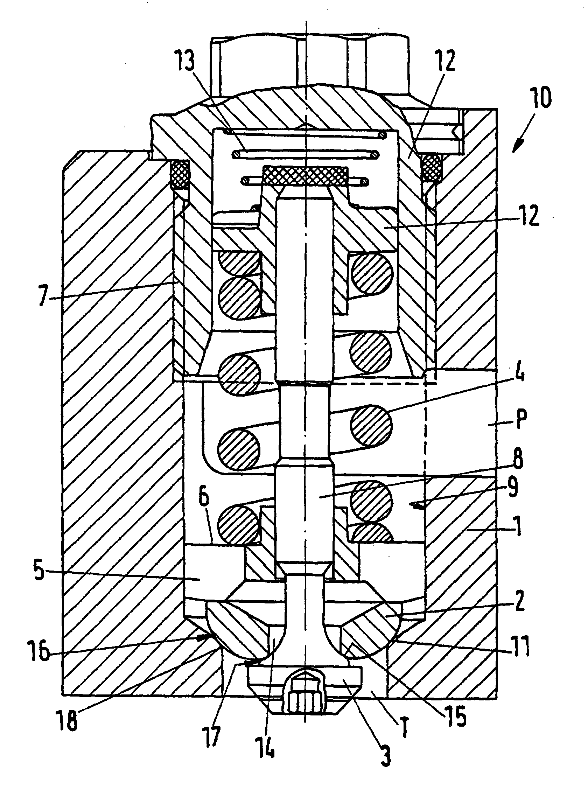

In the following the invention is described on the basis of a preferred embodiment in connection with the drawing. Hereby, the
- only figure: shows a schematic cross section through an overpressure valve.

In a housing 1 an overpressure valve 10 has a pump connection P and a tank connection T. Approximately coaxially with the tank connection T a closing member 2 formed as a plate is placed, which is co-operating with a valve seat 11 in housing 1. Via an intermediary piece 6, the closing member 2 is force admitted by a first spring 4. In the circumferential direction, the intermediary piece 6 is provided with several outward turned fingers, between which channels 5 have been arranged. By means of the fingers, the intermediary piece 6 is led into a bore 9 in the housing. Under the influence of the first spring 4, the intermediary piece 6 bears against the closing member 2. However, it can also be fixedly connected or made in one piece with the closing member, so that only a common movement of intermediary piece 6 and closing member 2 is possible and the closing member 2 is led into the bore 9. In the extreme case, the whole part consisting of intermediary piece 6 and closing member 2 can then be coated. Also here coating is only required on the side turning towards the valve seat 11.

The first spring 4 surrounds a rod 8, on one end of which a stop 12 is arranged, which stop is supported by an insert 7 via a second spring 13, said insert being screwed into the housing 1. On the other side of the stop 12 the first spring 4 is bearing. The opposite end of the rod 8 is led through a bore 14 in the closing member 2 and provided with an additional closing member 3 formed as a valve cone. The additional closing member 3 closes the bore 14. For this purpose the closing member 2 is provided with an additional valve seat 15.

As can be seen, the additional closing member 3 is bearing on the same side of the closing member 2 on which also the valve seat 11 of the housing 1 is acting. Thus, here the closing member 2 has two closing surfaces 16, 17, of which the one, radially external, is co-operating with the valve seat 11, which also has a closing surface, and the other, radially internal, is co-operating with the additional closing member 3, which here also has a closing surface working together with the closing surface 17 of the closing member 2.

On this side the closing member 2 is provided with a coating 18, which is made of a softer material than the valve seat 11 or the additional closing member 3. The coating 18 can consist of a soft metal, such as tin, lead or zinc. However, it can also be made of a synthetic material. The term "soft" must of course always be considered in relation to the co-operating material, which is in this case the material used for the valve seat 11 or the additional closing member 3, respectively. Preferably, the coating material 18 is galvanised or steamed onto the closing surface. This gives on the one hand a very tight connection between the coating 18 and the closing member 2, but on the other hand also a relatively thin coating layer. The thickness of the coating material 18 is less than 50 µm, preferably only 10 µm or less.

The function of such an overpressure valve 10 in itself is known. When the pressure in the pump connection P gets too high, it propagates into the bore 14, where it lifts the additional closing member 3 from the closing member 2. Fluid can then flow away through the opened flow path, i.e. between closing member 2 and additional closing member 3, which results in a pressure release.

When, on the other hand, the pressure in the tank connection T increases too heavily, the pressure here will lift the closing member 2 from the valve seat 11. Thus the fluid can flow on to the pump connection P, which will lead to a pressure release in the tank connection T. The same applies for make-up. The opening of the closing member 2 prevents the occurring of an underpressure in the pump connection P. The terms "pump connection" and "tank connection" have only been chosen to help distinguish the two connections from each other.

The fact that the closing member 2 is provided with a coating 18 of a soft material enables the production of the overpressure valve 10 without the need for narrow tolerances and extremely high accuracies. Also when the individual closing surfaces 16 and 17 do not fit exactly with the corresponding closing surfaces in the housing 1 and on the additional closing member 3, i.e have small unevennesses, this is not crucial. Such unevennesses will be pressed into the soft coating 18, thus causing a tightness of the valve through the force of the first spring 4 already when mounting.

Repeated opening and closing movements of the valve will cause a certain mechanical load of the coating 18, to an extent which will cause a partial or even almost complete wear of the coating 18. However, this wear will be limited to areas, on which the highest loads are concentrated. Between these areas, for instance in the areas where the closing surfaces 16, 17 or their corresponding counter closing surfaces have depressions, such a load cannot be exerted. Here the coating 18 will be preserved, meaning that also after a long operation period the closing surfaces 16, 17 will still be adapted to their corresponding counter closing surfaces. This can be additionally supported by a corresponding adaptation of the hardnesses of the individual materials. Thus the closing member 2 could for instance be made of sintered steel, while the additional closing member 3 is made of hardened steel.

In spite of the improved tightness, the production is simplified. The only additional production step required is to provide one side of the closing member 2 with the coating 18. On the other hand, this additional production step will cause a reduction of the expenses for the mounting of the overpressure valve 10. The mounting can be made with high tolerances. It is no longer necessary to be extremely careful to avoid that the closing surfaces 16, 17 are touched by other parts.

## Claims

1. Valve with a closing member (2) co-operating with a valve seat, both closing member (2) and valve seat having in their contact area a closing surface, which bear against each other in the closed state, by which one closing surface is coated with a coating material being softer than the material of the other surface, **characterised in that** the closing member (2) has an additional valve seat (15) co-operating with an additional closing member (3), by which an additional closing surface (17) between the additional valve seat (15) and the additional closing member (3) is coated with the coating material.

2. Valve according to claim 1, **characterised in that** the coating material (18) is made in one piece with the closing surface (16).

3. Valve according to claim 1 or 2, **characterised in that** the thickness of the coating material (18) is less than 50 µm, especially 10 µm or less.

4. Valve according to one of the claims 1 to 3, **characterised in that** the coating material (18) is galvanised or steamed onto the closing surface.

5. Valve according to one of the claims 1 to 4, **characterised in that** the coating material is a metal.

6. Valve according to claim 5, **characterised in that** the metal is tin, lead or zinc.

7. Valve according to one of the claims 1 to 4, **characterised in that** the coating material (18) is a synthetic material.

8. Valve according to claim 1, **characterised in that** the closing member (2) is formed as a plate, on which the closing surface (16) is placed on the bearing side of the additional closing member (3), and that at least this side is coated with the coating material (18).

9. Valve according to claim 1 or 8, **characterised in that** the closing member (2) is made of sintered steel and the additional closing member (3) is made of hardened steel.

## Patentansprüche

1. Ventil mit einem Schließelement (2), das mit einem Ventilsitz zusammenwirkt, wobei das Schließelement (2) und der Ventilsitz in ihrem Berührungsbereich je eine Schließfläche aufweisen, die im Schließzustand aneinander anliegen, wobei die eine Schließfläche mit einem Beschichtungsmaterial beschichtet ist, das weicher als das Material der anderen Schießfläche ist, **dadurch gekennzeichnet, daß** das Schließelement (2) einen Zusatzventilsitz (15) aufweist, der mit einem Zusatzschließelement (3) zusammenwirkt, wobei eine Zusatzschließfläche (17) zwischen dem Zusatzventilsitz (15) und dem Zusatzschließelement (3) mit dem Beschichtungsmaterial (18) beschichtet ist.

2. Ventil nach Anspruch 1, **dadurch gekennzeichnet, daß** das Beschichtungsmaterial (18) einstückig mit der Schließfläche (16) verbunden ist.

3. Ventil nach Anspruch 1 oder 2, **dadurch gekennzeichnet, daß** die Stärke des Beschichtungsmaterials (18) weniger als 50 µm, insbesondere 10 µm oder weniger beträgt.

4. Ventil nach einem der Ansprüche 1 bis 3, **dadurch gekennzeichnet, daß** das Beschichtungsmaterial (18) aufgalvanisiert oder aufgedampft ist.

5. Ventil nach einem der Ansprüche 1 bis 4, **dadurch gekennzeichnet, daß** das Beschichtungsmaterial ein Metall ist.

6. Ventil nach Anspruch 5, **dadurch gekennzeichnet, daß** das Metall Zinn, Blei oder Zink ist.

7. Ventil nach einem der Ansprüche 1 bis 4, **dadurch gekennzeichnet, daß** das Beschichtungsmaterial (18) ein Kunststoff ist.

8. Ventil nach Anspruch 1, **dadurch gekennzeichnet, daß** das Schließelement (2) als Teller ausgebildet ist, bei dem die Schließfläche (16) auf der gleiche Seite angeordnet ist, an der auch das Zusatzschließelement (3) anliegt, und daß zumindest diese Seite mit dem Beschichtungsmaterial (18) beschichtet ist.

9. Ventil nach Anspruch 1 oder 8, **dadurch gekennzeichnet, daß** das Schließelement (2) aus gesintertem und das Zusatzschließelement (3) aus gehärtetem Stahl gebildet ist.

## Revendications

1. Soupape comportant un élément de fermeture (2) coopérant avec un siège de soupape, l'élément de fermeture (2) et ie siège de soupape ayant l'un et l'autre dans leur zone de contact une surface de fermeture, lesquelles surfaces de fermeture portant l'une contre l'autre dans l'état fermé, une surface de fermeture étant revêtue d'une matière de revêtement plus tendre que la matière de l'autre surface. **caractérisée en ce que** l'élément de fermeture (2) a un siège de soupape supplémentaire (15) coopérant avec un élément de fermeture supplémentaire (3), une surface de fermeture supplémentaire (17) entre le siège de soupape supplémentaire (15) et l'élément de fermeture supplémentaire (3) étant revêtues de la matière de revêtement.

2. Soupape selon la revendication 1, **caractérisée en ce que** la matière de revêtement (18) fait corps avec la surface de fermeture (16).

3. Soupape selon la revendication 1 ou 2, **caractérisée en ce que** l'épaisseur de la matière de revêtement (18) est inférieure à 50 µm. en particulier de 10 µm ou moins.

4. Soupape selon l'une des revendications 1 à 3, **caractérisée en ce que** la matière de revêtement (18) est galvanisée ou vaporisée sur la surface de fermeture.

5. Soupape selon l'une des revendications 1 à 4, **caractérisée en ce que** la matière de revêtement est un métal.

6. Soupape selon la revendication 1 ou 8, **caractérisée en ce que** le métal est de l'étain, du plomb ou du zinc.

7. Soupape selon l'une des revendications 1 à 4, **caractérisée en ce que** la matière de revêtement (18) est une matière synthétique.

8. Soupape selon la revendication 1, **caractérisée en ce que** l'élément de fermeture (2) se présente sous la forme d'une plaque, sur laquelle la surface de

9. Soupape selon la revendication 1 ou 8, **caractérisée en ce que** l'élément de fermeture (2) est en acier fritté et l'élément de fermeture supplémentaire (3) est en acier trempé.
